# FASCICULE DE BREVET EUROPEEN

(11) **EP 3 048 840 B1**
(45) Date de publication et mention de la délivrance du brevet: **08.03.2017**
(21) Numéro de dépôt: 16156206.1
(22) Date de dépôt: 23.09.2009
(51) Int. Cl.: H04W 52/02

(54) **PROCÉDÉ DE GESTION D'ONDES ÉLECTROMAGNÉTIQUES DANS UN RÉSEAU LOCAL**
VERFAHREN ZUR VERWALTUNG VON ELEKTROMAGNETISCHEN WELLEN IN EINEM LOKALEN NETZWERK
METHOD FOR MANAGING ELECTROMAGNETIC WAVES IN A LOCAL AREA NETWORK

(30) Priorité: 26.09.2008 FR 0856474
(43) Date de publication de la demande: 27.07.2016
(62) Demande divisionnaire de: 09748426.5
(73) Titulaire: Orange, 75015 Paris (FR)
(72) Inventeur: PIETO, Loïc, 22300 ROSPEZ (FR); DALOZ, Claude, 22300 LANNION (FR)

(56) Documents cités:
- EP-A- 1 841 142
- WO-A-2004/075583
- DE-A1-102005 051 291

## Description

### Arrière-plan de l'invention

L'invention concerne la gestion de l'émission d'ondes électromagnétiques au sein d'un réseau local de communication sans fil (WLAN : « Wireless Local Area Network ») comprenant une passerelle domestique et au moins un terminal sans fil.

La présente invention concerne plus particulièrement un procédé permettant de minimiser le rayonnement électromagnétique émis au niveau de la passerelle domestique.

Il est connu qu'une passerelle domestique équipée d'une interface Wi-Fi^{®} émet des trames à intervalles de temps réguliers selon le protocole IEEE 802.11x. L'émission de ces trames permet notamment de diffuser un identifiant réseau de type SSID (« Service Set Identifier ») et d'identifier à chaque instant quels terminaux sont présents sur le réseau local ou réseau domestique.

En pratique, les trames sont diffusées dès lors que la passerelle domestique est mise sous tension, sans tenir compte de l'absence d'activité des terminaux au sein du réseau local.

D'un point de vue physique, une telle diffusion se traduit par l'émission d'ondes électromagnétiques.

Ainsi, une passerelle domestique sous tension émet périodiquement des ondes électromagnétiques, même lorsque les terminaux du réseau local (ordinateur portable, téléphone, imprimante) ne sont pas actifs ou lorsque ceux-ci ne requièrent pas de services (téléphonie sur IP, consultation web) auprès de la passerelle domestique.

L'émission de ces ondes contribue donc à augmenter inutilement le niveau de rayonnement électromagnétique environnant. Ceci a pour effet d'accroître la pollution électromagnétique autour de la passerelle domestique, pouvant provoquer des interférences néfastes avec des appareils électroniques voisins.

Par ailleurs, cette émission d'ondes contribue à augmenter la consommation électrique de la passerelle domestique.

Le document WO2004/075583 dévoile un système pour un réseau sans fil local pour la réduction de la pollution électromagnétique à travers de la désactivation et réactivation des signaux de balise.

### Objet et résumé de l'invention

La présente invention concerne un procédé de gestion de l'émission d'ondes électromagnétiques dans un réseau local de communication sans fil comprenant une passerelle domestique et au moins un terminal. La passerelle domestique comprenant au moins une interface de communication sans fil apte à émettre des ondes électromagnétiques pour communiquer avec ledit au moins un terminal.

Le procédé selon l'invention comprend les étapes suivantes :
- désactivation de l'émission des ondes électromagnétiques au niveau de ladite au moins une interface de communication sans fil; et
- sur réception d'un événement en provenance ou à destination dudit au moins un terminal, réactivation de l'émission des ondes électromagnétiques au niveau de ladite au moins une interface de communication sans fil.

Le procédé selon l'invention permet ainsi de réduire la quantité d'ondes électromagnétiques émises dans un espace correspondant au domaine de portée radio de la passerelle domestique. En réduisant la quantité totale d'ondes électromagnétiques émises, le procédé selon l'invention permet avantageusement d'une part, d'optimiser la consommation électrique de la station de base et d'autre part, de réduire la pollution électromagnétique environnante.

Selon une caractéristique de l'invention, l'étape de désactivation est effectuée en l'absence de communication en cours entre la passerelle domestique et ledit au moins un terminal et si aucun événement relatif à l'utilisation dudit au moins un terminal n'est reçu par la passerelle domestique pendant une durée prédéterminée.

En l'absence d'activité au niveau du terminal, la passerelle domestique n'émet aucune onde électromagnétique à destination de ce terminal, permettant ainsi de minimiser la quantité d'ondes électromagnétiques émises par la passerelle domestique.

Selon une autre caractéristique de l'invention, un événement est constitué par une requête d'accès à la passerelle domestique émise par ledit au moins un terminal ou une requête à destination dudit au moins un terminal fournie par au moins un réseau externe.

Ainsi, l'émission d'ondes électromagnétiques est réactivée dès lors que la passerelle domestique reçoit une communication entrante à destination du terminal ou une requête de service en provenance du terminal, cette requête de service pouvant être adressée directement à la passerelle par voie radio ou bien indirectement par l'intermédiaire d'au moins un réseau externe (UMTS, WAN).

Selon une autre caractéristique de l'invention, le terminal émet la requête d'accès dans un réseau de communication cellulaire de manière à l'acheminer vers la passerelle domestique via un réseau d'accès filaire.

Ce mode de réalisation est particulièrement avantageux dans le cas où l'interface de communication sans fil de la passerelle domestique ne permet pas de désactiver l'émission indépendamment de la réception. De ce fait, la passerelle domestique ne peut pas recevoir des requêtes émises par le terminal au moyen de son interface sans fil.

Selon une autre caractéristique de l'invention, l'étape de réactivation est effectuée si ledit événement est relatif à un terminal préalablement identifié auprès de la passerelle domestique sur le réseau local.

Ainsi, les terminaux qui ne sont pas préalablement identifiés auprès de la passerelle domestique ne sont pas autorisés à réactiver l'émission des ondes électromagnétiques au niveau de la passerelle domestique. En empêchant à des terminaux non autorisés de provoquer la réactivation de l'émission de la passerelle domestique, le procédé selon l'invention évite des réactivations non autorisées ce qui a pour effet de minimiser encore la quantité d'ondes électromagnétiques émises par la passerelle domestique.

L'invention vise également une passerelle domestique dans un réseau local de communication sans fil comprenant au moins un terminal, la passerelle domestique comprenant au moins une interface de communication sans fil apte à émettre des ondes électromagnétiques pour communiquer avec ledit au moins un terminal.

La passerelle domestique selon l'invention comprend en outre :
- des moyens de désactivation pour désactiver l'émission des ondes électromagnétiques au niveau de ladite au moins une interface de communication sans fil;
- des moyens de réception d'un événement en provenance ou à destination dudit au moins un terminal ;
- des moyens de réactivation pour réactiver l'émission des ondes électromagnétiques au niveau de ladite au moins une interface de communication sans fil, sur réception dudit événement.

Selon une caractéristique de l'invention, la passerelle domestique comprend en outre des moyens de mémorisation comprenant au moins un identifiant d'un terminal autorisé à provoquer la réactivation de l'émission des ondes électromagnétiques au niveau de la passerelle domestique.

Dans un mode particulier de réalisation, les différentes étapes du procédé de gestion des ondes sont déterminées par des instructions de programmes informatiques.

En conséquence, l'invention vise aussi un programme informatique sur un support d'informations, ce programme étant susceptible d'être exécuté par un processeur d'une passerelle domestique selon l'invention ou plus généralement par un processeur d'un ordinateur, ce programme comportant des instructions de code adaptées à la mise en oeuvre des étapes d'un procédé l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement d'informations lisible par un ordinateur, et comportant des instructions d'un programme informatique tel que mentionné ci-dessus.

Le support d'enregistrement peut être n'importe quelle entité ou dispositif capable de stocker le programme informatique. Par exemple, le support peut comporter un moyen de stockage, tel qu'une mémoire morte ROM, par exemple un CD-ROM/DVD ou une ROM de circuit microélectronique, ou encore un moyen d'enregistrement magnétique, par exemple une disquette (floppy disc) ou un disque dur.

Par ailleurs, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme informatique est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les dessins :
- la figure 1 illustre de manière schématique un système comprenant une passerelle domestique selon un mode de réalisation de la présente invention ;
- la figure 2 illustre sous forme d'organigramme les étapes du procédé selon un mode de réalisation de la présente invention ; et
- la figure 3 illustre de manière schématique un système comprenant une passerelle domestique selon une variante de réalisation de la présente invention.

### Description détaillée d'un mode de réalisation

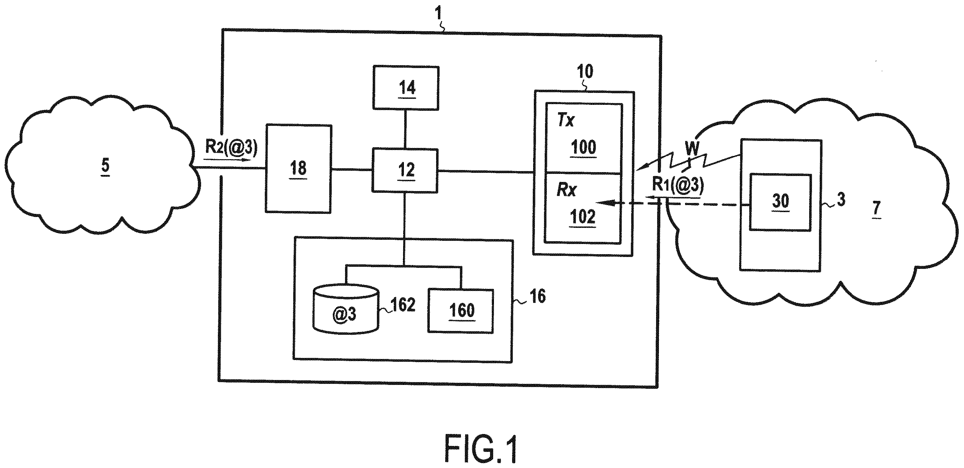

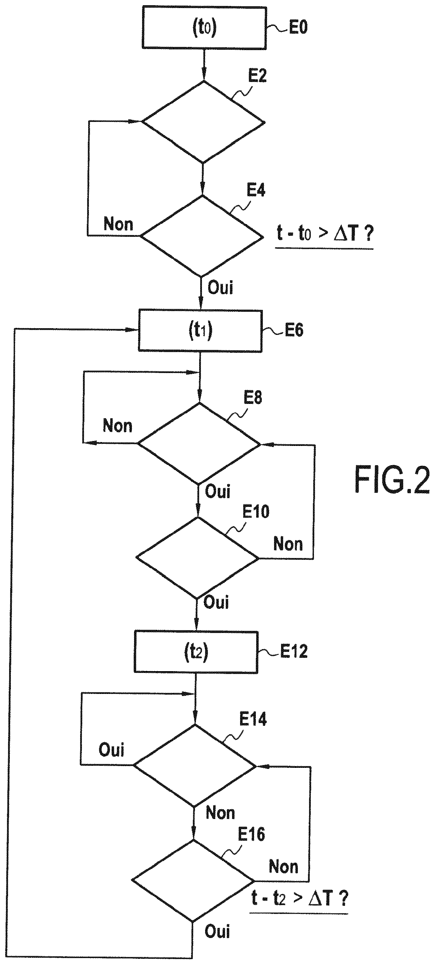

Un mode de réalisation de l'invention va être maintenant décrit de manière détaillée en référence aux figures 1 et 2.

La figure 1 représente de manière schématique un système de communication comprenant une passerelle domestique 1 placée en coupure de flux entre un réseau d'accès 5 et un réseau local 7 dit réseau domestique 7.

Le réseau domestique 7 comprend un terminal 3 équipé d'une interface de communication sans fil 30 apte à communiquer avec la passerelle domestique 1.

La passerelle domestique 1 a l'architecture conventionnelle d'un ordinateur. Elle comporte notamment un processeur 12, une mémoire vive 14 de type RAM et une mémoire morte 16 de type ROM.

La mémoire morte 16 constitue un support d'enregistrement mémorisant un programme informatique 160 conforme à l'invention. Ce programme 160 comporte des instructions de code pour l'exécution des étapes du procédé selon l'invention représentées sur l'organigramme de la figure 2.

La mémoire morte 16 de la passerelle domestique 1 comporte en outre une base de données 162 destinée à mémoriser des identifiants de terminaux autorisés à provoquer la réactivation de l'émission des ondes électromagnétiques du module d'émission 100 de la passerelle domestique 1. A titre d'exemple, les terminaux autorisés sont identifiés dans la base de données 162 au moyen de leur adresse MAC (« Médium Access Control »). En particulier, on suppose que la base de données 162 comprend l'adresse @3 MAC du terminal 3.

La mémoire vive 14 est utilisée par le processeur 12 de la passerelle domestique 1, lors de l'exécution du programme informatique 160 selon l'invention.

La passerelle domestique 1 comprend d'une part une interface classique de communication filaire 18 adaptée à communiquer avec le réseau d'accès 5 et d'autre part, une interface de communication sans fil 10 comportant un module d'émission 100 et un module de réception 102 pour communiquer avec les terminaux présents sur le réseau domestique 7.

A titre d'exemple, l'interface de communication sans fil 10 de la passerelle domestique 1 est une interface WiFi classique apte à communiquer selon le protocole IEEE 802.11x. Les modules d'émission 100 et de réception 102 sont aptes à émettre et recevoir des ondes électromagnétiques dans le domaine micro-onde autour des fréquences 2.4 GHz et 5 GHz.

Dans cet exemple illustratif, la passerelle domestique 1 comprend une seule interface de communication sans fil 10, mais bien évidemment, l'invention s'applique également dans le cas où la passerelle domestique comprend plusieurs interfaces de communication sans fil (Bluetooth^{®}, UWB : « UltraWide Band », Zigbee^{®} (IEEE 802.15.4)).

Le terminal 3 comprenant une interface de communication Wi-Fi^{®} apte à communiquer avec l'interface de communication sans fil 10 de la passerelle domestique 1 selon le protocole 802.11x.

Dans l'exemple présent, le terminal 3 est constitué par un ordinateur portable comprenant une carte réseau Wi-Fi®. Bien évidemment, le terminal 3 pourra être constitué par tout type de terminal apte à communiquer par voie radio avec la passerelle domestique, tels qu'un PDA « Personal Digital Assistant » ou un téléphone équipé de la technologie Wi-Fi^{®}. Par ailleurs, le terminal 3 est identifié notamment à l'aide de son adresse MAC auprès de la passerelle domestique 1.

Les étapes du procédé selon l'invention vont être maintenant décrites en référence à la figure 2.

Lors d'une étape initiale E0, la passerelle domestique 1 est mise sous tension à l'instant t0 puis le terminal 3 est intégré au réseau domestique 7 de manière classique lors d'une phase d'initialisation. Ensuite, la passerelle 1 émet régulièrement des trames Wi-Fi^{®} selon les spécifications du protocole IEEE 802.11x.

Lors d'une étape de test E2, la passerelle domestique 1 vérifie à chaque instant t, si un événement est reçu.

Par la suite, le terme « événement » désignera de manière générale toute action relative à un service fourni par la passerelle domestique tel que l'accès au réseau Internet (consultations web, réception/émission d'appels). A titre d'exemple illustratif un événement peut être constitué par :
- une requête d'accès R1 à la passerelle domestique 1 émise par le terminal 3, telle qu'une requête d'accès à Internet selon le protocole HTTP, une requête d'initialisation d'appel selon le protocole SIP;
- une requête de communication R2 à destination du terminal 3 fournie par le réseau d'accès 5, telle qu'une requête d'appel SIP vers le terminal 3.

Si aucun événement n'est reçu à l'instant t par le module de réception 102 de la passerelle domestique 1 (test E2 négatif), celle-ci vérifie, lors d'une étape de test E4, si le temps t-t0 qui s'est écoulé depuis sa mise sous tension à l'instant t0, excède une durée prédéterminée ΔT.

Si la passerelle domestique 1 ne reçoit aucun événement (test E2 négatif) en provenance ou à destination du terminal 3 pendant une durée supérieure à la durée prédéterminée ΔT (test E4 positif : t-t₀>ΔT), celle-ci désactive automatiquement son module d'émission 100, lors d'une étape de désactivation E6, à un instant t1.

Par exemple, si la passerelle domestique 1 ne reçoit aucun événement pendant une période ΔT=10 mn, le module d'émission 100 de la passerelle 1 est désactivé de manière sélective au moyen d'une application exécutée par son processeur 12, en utilisant des « drivers » aptes à piloter le module d'émission 100.

Dans ce mode de réalisation, il est prévu que le module d'émission 100 est désactivé alors que le module de réception 102 reste actif, de sorte que la passerelle 1 ne puisse plus émettre d'ondes électromagnétiques, tout en étant capable de recevoir des requêtes directement adressées par le terminal 3 par WiFi. L'étape de désactivation E6 du module d'émission 100 de la passerelle 1 évite à celle-ci d'émettre des ondes électromagnétiques lors de périodes d'inactivité pendant lesquels le terminal 3 n'a nullement besoin de communiquer avec la passerelle 1.

Ainsi, le module d'émission 100 de la passerelle domestique 1 reste désactivé tant que celle-ci ne reçoit pas de requête (ou événement) en provenance ou à destination d'un terminal autorisé.

Dès lors qu'une requête est reçue par la passerelle 1 (test E8 positif), celle-ci extrait l'adresse source et/ou destination et vérifie dans sa base de données 162 si cette adresse est comprise dans une liste d'adresses autorisées.

En cas de vérification positive (test E10 positif), l'émission des ondes électromagnétiques au niveau de l'interface de communication sans fil 10 de la passerelle 1 est réactivée, lors d'une étape de réactivation E12. Pour cela, le module d'émission 100 de la passerelle 1 est réactivé à un instant t2, au moyen d'une application exécutée par le processeur 12 utilisant des « drivers » aptes à piloter le module d'émission 100.

Le module d'émission 100 de la passerelle 1 est maintenu activé tant qu'aucune requête n'est reçue par la passerelle 1 (soit au niveau de l'interface de communication filaire 18 soit au niveau de l'interface de communication sans fil 10) pendant une durée supérieure à ΔT.

Ainsi, le module d'émission 100 de la passerelle 1 est désactivé lors de l'étape de désactivation E12, si la passerelle n'a pas reçu de requête (test E14 négatif) depuis l'instant t2 de réactivation du module d'émission 100, c'est-à-dire à un instant t tel que t-t2>ΔT (test E16 positif).

Ainsi, la passerelle 1 est adaptée à émettre des ondes électromagnétiques uniquement sur réception d'un événement (ou requête). C'est le cas notamment lorsqu'un terminal du réseau local a besoin d'accéder à au moins un service fourni par la passerelle.

Dans le cas où le terminal possède des moyens de positionnement tels qu'un module GPS (« Global Positioning System »), il peut être prévu que le terminal 3 génère automatiquement une requête d'accès à la passerelle domestique 1 lorsque celui-ci se trouve dans une zone géographique prédéterminée.

Dans le cas où le terminal (e.g.: ordinateur) possède un périphérique (e.g.: webcam) permettant de détecter la présence d'un utilisateur à proximité du terminal, il peut être prévu que ce périphérique commande automatiquement l'envoi d'une requête d'accès par le terminal.

Dans le mode de réalisation décrit ci-avant, on a considéré le cas où le module d'émission 100 de la passerelle domestique 1 peut être désactivé de manière sélective, c'est-à-dire indépendamment du module de réception 102.

Toutefois, pour certains types de passerelles domestiques, le module d'émission ne peut pas être piloté indépendamment du module de réception. Cela signifie que la désactivation du module d'émission implique inévitablement la désactivation du module de réception, rendant impossible la réception d'événements au niveau de l'interface de communication sans fil de la passerelle dès lors que la désactivation est réalisée.

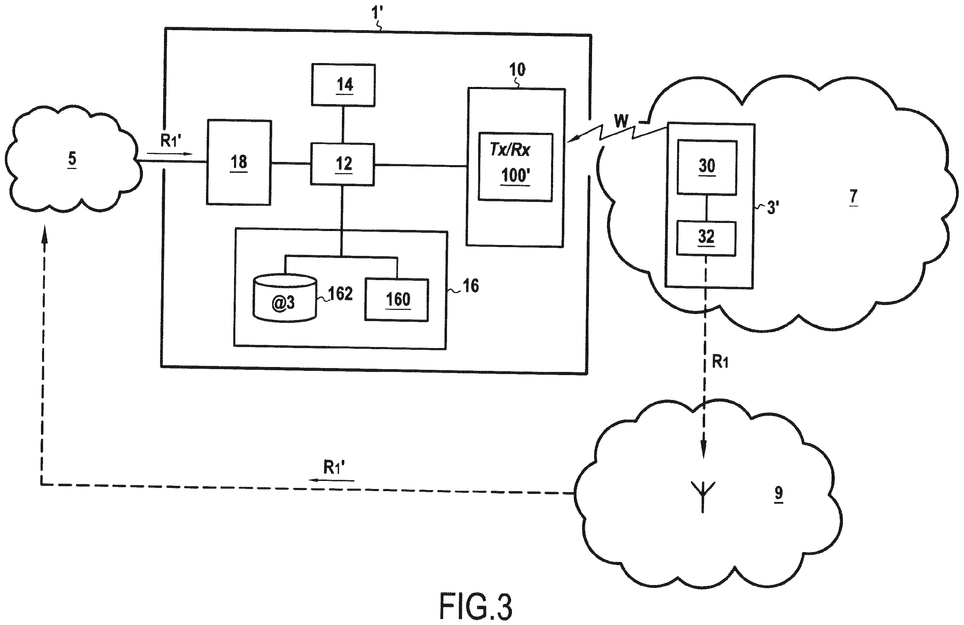

Une variante de mise en oeuvre de l'invention va être maintenant décrite en référence à la figure 3 pour prendre en compte cette particularité.

La figure 3 représente de manière schématique un système de communication comprenant une passerelle domestique 1' placée en coupure de flux entre le réseau d'accès 5 et le réseau local 7.

Les numéros de références de la figure 3 identiques à ceux de la figure 1 déjà décrite représentent les mêmes éléments.

La passerelle domestique 1' illustrée sur la figure 3 diffère de la passerelle domestique 1 décrite en référence à la figure 1 en ce que l'interface de communication sans fil 10 comporte un module d'émission/réception 100' pour lequel le processeur 12 n'est pas apte à désactiver/réactiver l'émission indépendamment de la réception selon la particularité décrite ci-dessus.

Dans ce cas, le terminal 3' comprend en outre une deuxième interface de communication sans fil 32 apte à communiquer avec un réseau de communication externe 9 permettant de faire transiter la requête R1 vers la passerelle domestique 1' via le réseau d'accès 5.

Le réseau de communication externe 9 est constitué par un réseau de communication cellulaire tel que le réseau GSM ou UMTS.

A titre d'exemple illustratif, le terminal 3' est un téléphone mobile bi-mode WiFi/UMTS apte à communiquer d'une part avec la passerelle domestique 1' selon le protocole IEEE 802.11x et d'autre part avec le réseau cellulaire UMTS.

Ainsi, lorsque le module d'émission/réception 100' de la passerelle 1' est désactivé, le terminal 3' émet la requête d'accès R1 dans le réseau de communication cellulaire 9 de manière à l'acheminer vers la passerelle domestique 1' via le réseau d'accès filaire 5 auquel la passerelle domestique 1' est relié par l'interface de communication filaire 18.

## Revendications

1. Procédé de gestion de l'émission d'ondes électromagnétiques (W) dans un réseau local de communication sans fil (7) comprenant une passerelle domestique (1 ; 1') et au moins un terminal (3 ; 3'), ladite passerelle domestique (1 ; 1') comprenant au moins une interface de communication sans fil (10) apte à émettre des ondes électromagnétiques (W) pour communiquer avec ledit au moins un terminal (3 ; 3'), ledit procédé comprenant les étapes suivantes :
- désactivation (E6) de l'émission des ondes électromagnétiques (W) au niveau de ladite au moins une interface de communication sans fil (10) ; et
- sur réception (E8) d'un événement en provenance (R1 ; R'1) ou à destination (R2) dudit au moins un terminal (3 ; 3'), réactivation (E12) de l'émission des ondes électromagnétiques (W) au niveau de ladite au moins une interface de communication sans fil (10),
et **caractérisé en ce que** ledit évènement est constitué par une requête d'accès (R1) à la passerelle domestique (1 ; 1') émise par ledit au moins un terminal (3, 3') par l'intermédiaire d'au moins un réseau externe (5 ; 9).

2. Procédé selon la revendication 1, où ladite étape de désactivation (E6) est effectuée en l'absence de communication en cours entre la passerelle domestique (1 ; 1') et ledit au moins un terminal (3 ; 3') et si aucun événement relatif à l'utilisation dudit au moins un terminal (3 ; 3') n'est reçu par la passerelle domestique (1 ; 1') pendant une durée prédéterminée (ΔT).

3. Procédé selon la revendication 1, où ledit terminal (3') émet ladite requête d'accès dans un réseau de communication cellulaire (9) de manière à l'acheminer vers la passerelle domestique via un réseau d'accès filaire (5).

4. Procédé selon la revendication 1 ou 2, où ladite étape de réactivation (E12) est effectuée si ledit événement est relatif à un terminal (3, 3') préalablement identifié auprès de la passerelle domestique (1 ; 1') sur le réseau local (7).

5. Procédé selon la revendication 4, où ledit terminal (3, 3') est préalablement identifié auprès de la passerelle domestique (1, 1') à l'aide de son adresse MAC.

6. Procédé selon l'une des revendications précédentes, où l'événement est un événement parmi un ensemble d'événements comprenant :
• un événement relatif à une consultation web ou à une réception/émission d'un appel ;
• une requête d'accès à Internet selon le protocole http émise par le terminal ;
• une requête d'initialisation d'appel selon le protocole SIP émise par le terminal ;
• une requête d'appel selon le protocole SIP émise à destination du terminal.

7. Procédé selon l'une des revendications précédentes, où le terminal (3, 3') génère automatiquement une requête d'accès lorsque celui-ci se trouve dans une zone géographique déterminée par des moyens de positionnement du terminal.

8. Procédé selon l'une des revendications précédentes, où le terminal (3, 3') commande automatiquement l'envoi d'une requête d'accès suite à la détection, au moyen d'un périphérique du terminal, de la présence d'un utilisateur à proximité du terminal.

9. Passerelle domestique (1 ; 1') dans un réseau local de communication sans fil (7) comprenant au moins un terminal (3 ; 3'), ladite passerelle domestique comprenant au moins une interface de communication sans fil (10) apte à émettre des ondes électromagnétiques (W) pour communiquer avec ledit au moins un terminal (3 ; 3'), ladite passerelle domestique (1 ; 1') comprenant en outre :
- des moyens de désactivation (12, 160) pour désactiver l'émission des ondes électromagnétiques (W) au niveau de ladite au moins une interface de communication sans fil (10, 100);
- des moyens de réception (18, 102, 100') d'un événement en provenance (R1) ou à destination (R2 ; R'1) dudit au moins un terminal (3, 3'), ledit évènement étant constitué par une requête d'accès (R1) à la passerelle domestique (1, 1') émise par ledit au moins un terminal (3, 3') par l'intermédiaire d'au moins un réseau externe (5 ; 9) ;
- des moyens de réactivation (12, 160) pour réactiver l'émission des ondes électromagnétiques (W) au niveau de ladite au moins une interface de communication sans fil (10, 100), sur réception dudit événement (R1 ; R2 ; R'1).

10. Passerelle domestique selon la revendication 9, comprenant en outre des moyens de mémorisation (16, 162) comprenant au moins un identifiant (@3) d'un terminal (3, 3') autorisé à provoquer la réactivation de l'émission des ondes électromagnétiques (W) au niveau de la passerelle domestique (1 ; 1').

11. Passerelle domestique selon la revendication 9 ou 10, où l'au moins une interface de communication sans fil (10) est une interface comprise dans un groupe comprenant :
• une interface WiFi ;
• une interface Bluetooth ;
• une interface UWB ;
• une interface Zigbee.

12. Passerelle domestique selon l'une des revendications 9 à 11, où le réseau externe (5) est un réseau WAN.

13. Passerelle domestique selon l'une des revendications 9 à 12, où ladite au moins une interface de communication sans fil (10) comporte un module d'émission/réception (100') pour lequel l'émission des ondes électromagnétiques (W) ne peut pas être désactivée/réactivée indépendamment de leur réception.

14. Programme informatique (160) comportant des instructions de code pour l'exécution des étapes du procédé selon la revendication 1, lorsque ce programme (160) est exécuté par un processeur (12) d'une passerelle domestique (1 ; 1') selon la revendication 9.

15. Support d'enregistrement (16) lisible par un processeur (12) sur lequel est enregistré le programme informatique (160) selon la revendication 14.

## Patentansprüche

1. Verfahren zum Steuern des Aussendens elektromagnetischer Wellen (W) in einem drahtlosen lokalen Kommunikationsnetz (7), das eine Haus-Brücke (1; 1') und wenigstens ein Endgerät (3; 3') umfasst, wobei die Haus-Brücke (1; 1') wenigstens eine drahtlose Kommunikationsschnittstelle (10) umfasst, die elektromagnetische Wellen (W) aussenden kann, um mit dem wenigstens einen Endgerät (3; 3') zu kommunizieren, wobei das Verfahren die folgenden Schritte umfasst:
- Deaktivieren (E6) des Aussendens elektromagnetischer Wellen (W) auf Höhe der wenigstens einen drahtlosen Kommunikationsschnittstelle (10); und
- bei Empfang (E8) eines Ereignisses von (R1; R'1) oder zu (R2) dem wenigstens einen Endgerät (3; 3') erneutes Aktivieren (E12) des Aussendens elektromagnetischer Wellen (W) auf Höhe der wenigstens einen drahtlosen Kommunikationsschnittstelle (10),
wobei das Verfahren **dadurch gekennzeichnet ist, dass** das Ereignis gebildet ist durch eine Anforderung (R1) für den Zugriff auf die Haus-Brücke (1; 1'), die von dem wenigstens einen Endgerät (3) durch wenigstens ein äußere Netz (5; 9) ausgesendet wird.

2. Verfahren nach Anspruch 1, wobei der Deaktivierungsschritt (E6) bei Abwesenheit einer laufenden Kommunikation zwischen der Haus-Brücke (1; 1') und dem wenigstens einen Endgerät (3; 3') und dann, wenn keinerlei Ereignis bezüglich der Verwendung des wenigstens einen Endgeräts (3; 3') während einer vorgegebenen Dauer (ΔT) von der Haus-Brücke (1; 1') empfangen wird, ausgeführt wird.

3. Verfahren nach Anspruch 1, wobei das Endgerät (3') die Zugriffsanforderung in einem Zellenkommunikationsnetz in der Weise aussendet, dass sie zu der Haus-Brücke über ein drahtgebundenes Zugriffsnetz (5) geleitet wird.

4. Verfahren nach Anspruch 1 oder 2, wobei der Reaktivierungsschritt (E12) ausgeführt wird, falls das Ereignis auf ein Endgerät (3, 3') bezogen ist, das im Voraus bei der Haus-Brücke (1; 1') in dem lokalen Netz (7) identifiziert worden ist.

5. Verfahren nach Anspruch 4, wobei das Endgerät (3, 3') im Voraus bei der Haus-Brücke (1; 1') mit seiner MAC Adresse identifiziert worden ist.

6. Verfahren nach einem der vorangehenden Ansprüche, wobei das Ereignis zu einer Ereignisgruppe gehört, die Folgendes umfasst :
• ein Ereignis bezüglich einer Webverbindung, oder eines Rufempfangs, oder einer Rufsendung;
• eine vom Endgerät ausgesendete Anforderung für den Zugriff auf das Internet, nach dem http Protokoll;
• eine vom Endgerät ausgesendete Anforderung für eine Rufinitialisierung, nach dem SIP Protokoll;
• eine zum Endgerät gesendete Rufanforderung, nach dem SIP Protokoll;

7. Verfahren nach einem der vorangehenden Ansprüche, wobei das Endgerät (3, 3') automatisch eine Zugriffanforderung erzeugt, wenn es sich in einer geographischen Zone befindet, die von Mittel des Endgeräts bestimmt worden ist.

8. Verfahren nach einem der vorangehenden Ansprüche, wobei das Endgerät (3, 3') automatisch die Aussendung einer Zugriffanforderung bestellt, infolge der mit einem Zubehör des Endgeräts bestimmten Feststellung, die die Anwesenheit eines Benutzer in der Nähe des Endgeräts feststellt.

9. Haus-Brücke (1; 1') in einem drahtlosen lokalen Kommunikationsnetz (7), das wenigstens ein Endgerät (3; 3') umfasst, wobei die Haus-Brücke wenigstens eine drahtlose Kommunikationsschnittstelle (10) umfasst, die elektromagnetische Wellen (W) aussenden kann, um mit dem wenigstens einen Endgerät (3; 3') zu kommunizieren, wobei die Haus-Brücke (1; 1') außerdem Folgendes umfasst:
- Deaktivierungsmittel (12, 160), um das Aussenden elektromagnetischer Wellen (W) auf Höhe der wenigstens einen drahtlosen Kommunikationsschnittstelle (10, 100) zu deaktivieren;
- Mittel (18, 102, 100') zum Empfangen eines Ereignisses von (R1) oder zu (R2; R'1) dem wenigstens einen Endgerät (3, 3'), wobei das Ereignis durch eine Anforderung (R1) für den Zugriff auf die Haus-Brücke (1, 1'), die von dem wenigstens einen Endgerät (3, 3') durch wenigstens ein äußere Netz (5; 9) ausgesendet wird, gebildet ist;
- Reaktivierungsmittel (12, 160), um das Aussenden elektromagnetischer Wellen (W) auf Höhe der wenigstens einen drahtlosen Kommunikationsschnittstelle (10, 100) bei Empfang des Ereignisses (R1; R2; R'1) erneut zu aktivieren.

10. Haus-Brücke nach Anspruch 9, die außerdem Speichermittel (16, 162) umfasst, die wenigstens eine Kennung (@3) eines Endgeräts (3, 3') enthalten, das die Reaktivierung des Aussendens elektromagnetischer Wellen (W) auf Höhe der Haus-Brücke (1; 1') hervorrufen darf.

11. Haus-Brücke nach Anspruch 9 oder 10, wobei die wenigstens eine drahtlose Kommunikationsschnittstelle (10) zu einer Schnittstellengruppe gehört, die Folgendes umfasst :
• eine WiFi Schnittstelle;
• eine Bluetooth Schnittstelle;
• eine UWB Schnittstelle;
• eine Zigbee Schnittstelle.

12. Haus-Brücke nach einem der Ansprüche 9 bis 11, wobei das äußere Netz ein WAN Netz ist.

13. Haus-Brücke nach einem der Ansprüche 9 bis 12, wobei die wenigstens eine drahtlose Kommunikationsschnittstelle (10) ein Aussendungs- /Empfangsmodul enthält, in dem die Aussendung von elektromagnetische Wellen (W) nicht unabhängig von ihrem Empfang deaktiviert/reaktiviert werden kann.

14. Datenverarbeitungsprogramm (160), das Codebefehle für die Ausführung der Schritte des Verfahrens nach Anspruch 1 enthält, wenn dieses Programm (160) von einem Prozessor (12) einer Haus-Brücke (1; 1') nach Anspruch 9 ausgeführt wird.

15. Aufzeichnungsträger (16), der von einem Prozessor (12) lesbar ist und auf dem das Datenverarbeitungsprogramm (160) nach Anspruch 14 aufgezeichnet ist.

## Claims

1. Method for managing the emission of electromagnetic waves (W) in a wireless local communication network (7) comprising a domestic gateway (1; 1') and at least one terminal (3; 3'), the said domestic gateway (1; 1') comprising at least one wireless communication interface (10) able to emit electromagnetic waves (W) for communicating with the said at least one terminal (3; 3'), the said method comprising the following steps:
- deactivation (E6) of the emission of the electromagnetic waves (W) at the level of the said at least one wireless communication interface (10); and
- on reception (E8) of an event originating from (R1; R'1) or destined for (R2) the said at least one terminal (3; 3'), reactivation (E12) of the emission of the electromagnetic waves (W) at the level of the said at least one wireless communication interface (10),
and being **characterized by** the said event consisting of an access request (R1) for access to the domestic gateway (1; 1') emitted by the said at least one terminal (3, 3') through the intermediary of at least one external network (5; 9).

2. Method according to Claim 1, where the said deactivation step (E6) is performed in the absence of ongoing communication between the domestic gateway (1; 1') and the said at least one terminal (3; 3') and if no event relating to the use of the said at least one terminal (3; 3') is received by the domestic gateway (1; 1') for a predetermined duration (ΔT).

3. Method according to Claim 1, where the said terminal (3') emits the said access request in a cellular communication network (9) so as to trunk it towards the domestic gateway via a wired access network (5).

4. Method according to Claim 1 or 2, where the said reactivation step (E12) is performed if the said event relates to a terminal (3, 3') previously identified with the domestic gateway (1; 1') on the local network (7).

5. Method according to Claim 4, where the said terminal (3, 3') is previously identified with the domestic gateway (1; 1') by means of its MAC address.

6. Method according to one of the preceding Claims, where the event is an event among a set of events comprising:
• an event relative to a web consultation or a call reception/transmission ;
• an Internet access request according to the http protocol, transmitted by the terminal ;
• a call initiation request according to the SIP protocol, transmitted by the terminal ;
• a call request according to the SIP protocol, transmitted to the terminal.

7. Method according to one of the preceding Claims, where the terminal (3, 3') automatically generates an access request when it finds itself in a geographical area determined by positioning means of the terminal.

8. Method according to one of the preceding Claims, where the terminal (3, 3') automatically commands the transmission of an access request, following detection of a user's presence in the vicinity of the terminal, by means of a peripheral of the terminal.

9. Domestic gateway (1; 1') in a wireless local communication network (7) comprising at least one terminal (3; 3'), the said domestic gateway comprising at least one wireless communication interface (10) able to emit electromagnetic waves (W) for communicating with the said at least one terminal (3; 3'), the said domestic gateway (1; 1') further comprising:
- deactivation means (12, 160) for deactivating the emission of the electromagnetic waves (W) at the level of the said at least one wireless communication interface (10, 100);
- reception means (18, 102, 100') for receiving an event originating from (R1) or destined for (R2; R'1) the said at least one terminal (3, 3'), the said event consisting of an access request (R1) for access to the domestic gateway (1) emitted by the said at least one terminal (3, 3') through the intermediary of at least one external network (5; 9);
- reactivation means (12, 160) for reactivating the emission of the electromagnetic waves (W) at the level of the said at least one wireless communication interface (10, 100) on receipt of the said event (R1; R2; R'1).

10. Domestic gateway according to Claim 9, furthermore comprising storage means (16, 162) comprising at least one identifier (@3) of a terminal (3, 3') authorized to cause the reactivation of the emission of the electromagnetic waves (W) at the level of the domestic gateway (1; 1').

11. Domestic gateway according to Claim 9 or 10, where the at least one wireless communication interface (10) is an interface comprised in a set comprising:
• a WiFi interface;
• a Bluetooth interface;
• a UWB interface;
• a Zigbee interface.

12. Domestic gateway according to one of Claims 9 to 11, where the external network (5) is a WAN network.

13. Domestic gateway according to one of Claims 9 to 12, where said at least one wireless communication interface (10) comprises a transmission/reception module (100') in which the transmission of electromagnetic waves (W) cannot be deactivated/reactivated independently from their reception.

14. Computer program (160) comprising code instructions for the execution of the steps of the method according to Claim 1, when this program (160) is executed by a processor (12) of a domestic gateway (1; 1') according to Claim 9.

15. Recording medium (16) readable by a processor (12) on which is recorded the computer program (160) according to Claim 14.
